# EUROPEAN PATENT SPECIFICATION

(11) **EP 1 556 611 B1**
(45) Date of publication and mention of the grant of the patent: **13.10.2010**
(21) Application number: 03757751.7
(22) Date of filing: 30.10.2003
(51) Int. Cl.: F04B 17/04, F04B 53/00, F23K 5/14

(54) **A RECIPROCATING LIQUID PUMP FOR DELIVERY OF LIQUID FUEL TO A DOMESTIC BURNER DEVICE**
KOLBENFLÜSSIGKEITSPUMPE ZUR ZUFUHR VON FLÜSSIGEM BRENNSTOFF ZUEINER HAUSHALTS-BRENNERVORRICHTUNG
POMPE A LIQUIDE ALTERNATIVE SERVANT A ALIMENTER UN BRULEUR DOMESTIQUE EN COMBUSTIBLE LIQUIDE

(30) Priority: 01.11.2002 DK 200201683
(43) Date of publication of application: 27.07.2005
(73) Proprietor: Danfoss A/S, 6430 Nordborg (DK)
(72) Inventor: KLAUSEN, Jorn, Holger, 6430 Nordborg (DK); KJELDAL, Bent, 6400 Sonderborg (DK)
(86) International application number: PCT/DK2003/000732
(87) International publication number: WO 2004/040135

(56) References cited:
- US-A- 4 352 645
- US-A1- 2001 043 873

## Description

The present invention relates to a reciprocating liquid pump for delivery of liquid fuel to a domestic burner device, said pump comprising an electromechanical drive means which is electronically activated and acts on a plunger to reciprocate the plunger in a pump chamber of a pump cylinder, whereby liquid fuel is delivered from the pump, said plunger having a maximum stroke end stop position.

Liquid fuel burners, such as oil burners, are quite common for domestic use. Ordinarily such oil burners are of the oil pressure atomizing type having high-pressure pumps delivering oil at high pressure. These burners operate on the principle that when oil under pressure is permitted to expand through a small orifice, it atomizes into a spray of very fine droplets, which are suitable for combustion. These burners are designed to operate with oil pressures as high as 40 bar. The principle upon which these burners operate requires that the pressure drop across the orifice be maintained high and as nearly constant as possible in order to achieve the necessary finely atomized droplets and a combustion without significant pulsations. Because it is not possible to maintain the required pressure drop at lower flow rates, turndown, which is defined as the ratio of maximum to minimum input rates, in the operation of such burners has traditionally been very severely limited or has not been used at all, and the burners have been operated in an on-off mode only. This, of course results in inferior temperature control, lower furnace efficiency and increased thermal load of the components, as they will experience a lot of heating and cooling cycles.

Further the minimum output of the burner is controlled by the size of the holes in the orifice. The smallest feasible holes are 0.1 mm in diameter, as smaller holes will clog very quickly due to inevitable particles in the oil or due to soot buildup from the combustion, increasing the need for maintenance to an intolerable level. The ordinary minimum output of oil burners having an orifice with the smallest holes possible, is about 10 kW, which exceeds the static demand of an ordinary household.

The prior art liquid fuel pumps have not been suitable for delivery of the very small quantities of oil needed for an output of less than 10 kW, and existing low volume oil pumps are quite complex and hence expensive to manufacture.

An important parameter for a pump for a burner of a household furnace is that it should be very quiet and preferably noiseless, as most people easily get annoyed and irritated if there is noise in their home.

US patent No. 4,352,645 discloses a prior art fuel oil pump for a burner nozzle of a household furnace. The pump is actuated by an electromagnet and comprises a small diameter pump piston providing a suction force for drawing in fuel oil into an intake chamber. The pump further comprises a main pumping chamber, a series of check valves and a plurality of springs. One advantage of the pump is that noise from armature braking is diminished, but the pump is quite complex and hence expensive to manufacture, and the many moving parts in the pump and also the suction of fuel oil into the intake chamber results in noise. Further the pump is quite voluminous and hence not optimal for installing in a small supply device for a domestic burner.

It is an object of the present invention to provide a liquid pump of simple configuration and a very low noise level.

With a view to this the liquid pump according to the invention is characterized in that the pump comprises pressure relief means to bleed the pump chamber at the end of the active stroke at a distance from the maximum stroke end stop position.

The bleeding of the pump chamber at the end of the active stroke provides a very well-defined and precise termination of the delivery of liquid fuel without using separate moving valve members that can create noise. The bleeding of the pump chamber while the plunger is at a distance from the maximum stroke end stop position provides space for reversing the movement of the plunger without any noisy abutment of the plunger against a stationary part. Simple pressure relief means can be used for bleeding of the pump chamber without necessarily increasing the number of separate moving parts. The pressure relief means allow a noiseless run of the reciprocating liquid pump.

In an embodiment the ratio L/D between an active stroke length L of the plunger and the plunger diameter D is less than 0.4, and preferably less than 0.2. The very small length of the active stroke in relation to the plunger diameter results in small pressure variations in the liquid fuel in the instant where the plunger seals off the pump chamber and initiates the active stroke. The restriction of the size of pressure variations by limiting the plunger movements is an optional measure for assisting the plunger in performing gentle, practically noiseless movements, and the forces on the plunger in order to make it effect the active stroke become so small that the plunger drive means can be also practically noiseless. By keeping the ratio L/D on less than 0.2 the very small active stroke length allows the pump to deliver a certain amount of fuel with a relatively high number of strokes. This promotes a more even flow of fuel delivered from the pump and thus a more stable continuous operation of the burner device despite the fact that the fuel is dosed intermittently by the reciprocating plunger.

In a preferred embodiment the full stroke length of the plunger during the reciprocating cycle is more than two times longer than the active stroke length, and preferably more than three times the active stroke length. This allows the plunger to effect a relatively slow retardation of its speed at termination of the active stroke. In addition to this it is also possible for the plunger to be retracted to an initial position well before the position at which the next active stroke is initiated. This provides a distance for the plunger to accelerate to pumping speed prior to the initiation of the actual active stroke with active pumping of the liquid fuel. The distance for running off its pumping speed and the distance for accelerating to pumping speed enhances the practically noiseless running of the pump because it allows the plunger drive means to act with relatively small forces upon the plunger and yet obtain the desired pumping action.

It is a possibility to let the pressure relief means connect the pump chamber with a fuel inlet to the pump when the plunger is not performing the active stroke. During the return of the plunger to the initial position liquid fuel from the fuel inlet can have access to the pump chamber via a non-return valve opening for inflow of fuel to the pump chamber, and consequently the fuel chamber is maintained filled with fuel at approximately the feeding pressure present in the fuel inlet. However, a more simple design without a non-return valve is preferred. In most cases the plunger does not need to perform any substantial suction of fuel into the pump chamber.

The plunger can be biased towards its initial, neutral position by a first return spring that returns the plunger after termination of the active stroke, and preferably also a second return spring acts on the plunger to advance it in direction of the pump chamber towards said neutral position. Return springs, e.g. of the helical compression spring type are very reliable, easy to mount, and the use of two counter-acting return springs are well suited for obtaining soft, noiseless movements of the plunger.

In an embodiment the plunger is activated by the electromechanical drive means with a frequency of at least 5 Hz. By effecting at least 5 strokes per second and thus delivering at least 5 doses of liquid fuel per second a low pressure burner can be kept continuously running, even though only a small amount of fuel is delivered per dose.

Preferably, the plunger is activated by the electromechanical drive means with a frequency in the range of from 50 to 60 Hz as this allows for use of a plunger drive means driven by alternating current from a public distribution network, which is usually available at all households.

The electromechanical drive means can include an armature comprising ferromagnetic material and mounted in extension of the plunger, and an electromagnet arranged outside the armature. This embodiment is straightforward to manufacture because the armature is a separate member. The armature is of another material than the plunger which can be of hardened steel that has poor magnetic properties.

The pressure relief means include in a preferred embodiment a pressure relief conduit arranged in the plunger and cooperating with a fuel inlet in the pump cylinder. During the entire active stroke the pressure relief conduit in the plunger is kept cut off from the fuel inlet in the cylinder in order to allow the pressure in the pump chamber to exceed the opening pressure of the liquid pump, which opening pressure is determined for instance by a spring force on a ball in a check valve at the outlet from the pump chamber.

Preferably, the pressure relief conduit comprises at least a first bore and an annular recess at the outer surface of the plunger, said first bore extending into the plunger from the pump chamber side thereof towards the annular recess. The annular recess makes it possible for the first bore to communicate with the fuel inlet in the pump cylinder at all rotational positions of the plunger in relation to the pump cylinder, provided the axial positioning of the plunger is outside the range for the active pumping stroke.

The first bore in the plunger can in one embodiment extend in direction of the centre axis of the plunger to join a transverse bore that extends into an annular recess in the outer surface of the plunger, and in another embodiment the first bore extends obliquely to the centre axis of the plunger directly into the annular recess in the outer surface of the plunger. In either case the pressure relief conduit can be manufactured in the plunger in a simple manner. The annular recess in the outer surface of the plunger provides well defined cut off edges. The first bore debouches in the front end (the head) of the plunger and is continuously subjected to the pressure prevailing in the pump chamber. As an alternative the annular recess can be located in the pump cylinder. In another solution, which is more difficult to manufacture, the pressure relief means include a pressure relief passage machined into the pump cylinder. The passage can be a recessed portion in the cylinder bore.

Preferably, the liquid pump is designed with one or more pressure equalizing channels communicating the pressure at the fuel inlet to the drive end side of the plunger. The pressure equalizing channels ensure that the drive end side of the plunger is kept at the pressure prevailing at the fuel inlet so that when the pump chamber is set into communication with the fuel inlet via the pressure relief means, then the plunger obtains a statically fully pressure-balanced state. One advantage of this is that the liquid pump becomes insensitive to pressure variations at the fuel inlet, e.g. pressure variations caused by a primer pump.

It is preferred that the liquid fuel delivery amount per activation of the plunger is in the range of 1 mm³ to 50 mm³. If the amount is less than 1 mm³ it can become difficult to deliver the amount out of the pump with the desired certainty and repeatability. Amounts above 50 mm³ is of course possible but the size of the pump will be larger. The most preferred amount of fuel per activation of the plunger is in the range of 2 mm³ to 15 mm³.

At an activation frequency of 50 Hz and a delivery amount of 2 mm³ per activation the fuel pump will deliver 0.36 litre of fuel per hour which covers the basic heat consumption of a typical single family house, and the delivery amount of 8 mm³ per activation at an activation frequency of 50 Hz results in delivery of 1.44 litre of fuel per hour, and that covers the high load heat consumption during consumption of hot water in a typical single family household. These amounts cover the needs of most households using oil fired heating systems.

Prior art high-pressure systems tend to create noise as they run. The low noise level obtained by the present invention can be further enhanced, such as to the point of elimination of noise, by preferably keeping the liquid fuel delivery pressure from the pump in the range of from 0.01 bar to 3 bar above atmospheric pressure. With these low pumping pressures audible sounds will not be created by the pressure changes occurring at initiation and termination of the active stroke of the plunger. A preferred pressure range is from 0.01 to 0.2 bar above atmospheric pressure.

The delivery amount of the liquid pump is preferably adjustable in order to adapt the amount of fuel delivered to the burner device to the current need for heating of for instance the water in a central heating system. The need for heating the water in the central heating system varies considerably during the year from winter to summer. During winter the need for heating can e.g. be proportional to the outdoor temperature, and during summer the need for heating for use in the central heating system can be non-existing. With respect to the need for heating hot water for personal use and for cleaning and use in the kitchen these needs are almost constant during the year, but varies considerably during the day.

In one embodiment the delivery amount is adjustable by turning the pump cylinder in relation to the plunger. The plunger can for instance have an oblique cut-off edge which passes the fuel inlet during the plunger movements, so that turning of the pump cylinder or the plunger results in a adjustment of the active stroke length.

In another embodiment the delivery amount is adjustable by changing the frequency of activation of the plunger. The delivery amount is linearly proportional with the activation frequency and a settable frequency converter can be adjusted to set the frequency of activation at the desired level. The delivery amount can also be adjustable by turning the liquid pump on and off. This can e.g. be relevant during summertime if there is only a need for heating of hot water for consumption.

In the following, examples of embodiments of the invention is described in greater detail with reference to the accompanying schematic drawings, on which
Fig. 1 illustrates a cross-section of a reciprocating liquid pump according to the present invention,
Fig. 2a-2d are enlarged sectional views of a pump chamber and a plunger in the liquid pump of Fig. 1, where the plunger is depicted in a most retracted, initial position in Fig. 2a, in a position of initiation of an active stroke in Fig. 2b, in a position of termination of an active stroke in Fig. 2c, and in a most advanced position in Fig. 2d,
Fig. 3a-3d are similar enlarged sectional views of a second embodiment of a pump chamber and a plunger,
Fig. 4 illustrates a third embodiment of a pump chamber and a plunger with a oblique cut-off edge, and
Fig. 5 illustrates a fourth embodiment of a pump chamber and a plunger.

For purposes of illustration, the present invention is embodied in a liquid pump 1 for metering fuel, such as may be used in dosing small volumes of fuel oil from a tank (not shown) or a primer pump (not shown) to the atomizing unit of a burner in an oil fired heating system, or to a burner device in a car engine heater (not shown). In the context of the present invention the word domestic is to be understood in a broad sense covering both a domestic burner device in a central heating system in a house, and a domestic burner device in peripheral equipment belonging to the household, such as in a car or in a sailboat.

The pump includes a housing 2 for a coil 17 of an electromagnet, which is connectable to a power source providing cycles or pulses of current. The electromagnet is a standard component, such as a Danfoss part order No. 71N0802. An armature cylinder 3 extends through the housing 2, and in cylinder 3 an armature 4 is arranged to be moveable in a reciprocating movement activated by the electromagnet. The armature 4 in turn acts on a plunger 5 reciprocating in a pump cylinder 6 comprising a pump chamber 7 defined by the inner surface of the pump cylinder 6, a check valve, which in this embodiment is a ball 8 biased against an opening of the pump chamber 7 by a compression spring 9, and a plunger head 10 of the plunger 5.

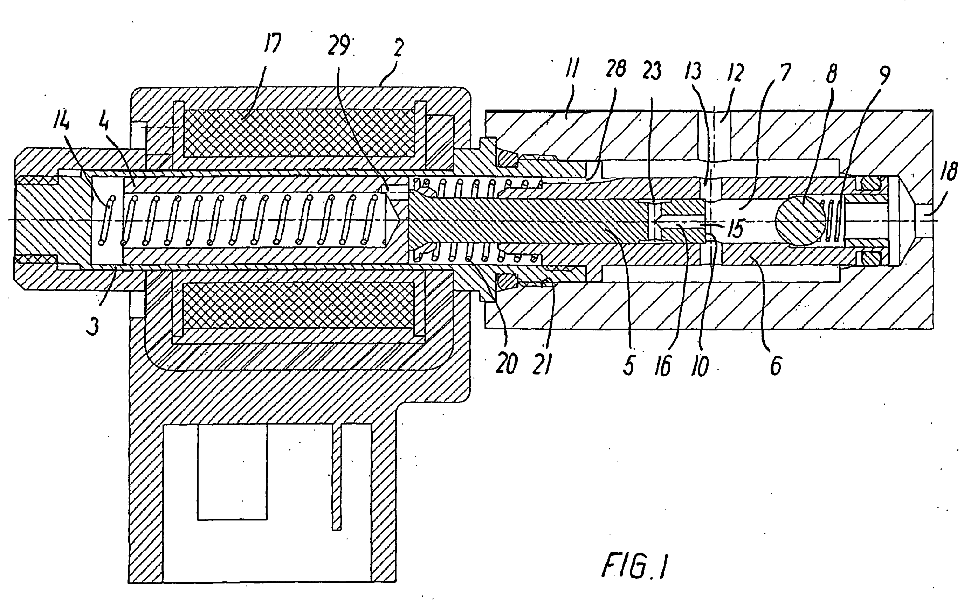

The pump 1 is mounted in a block 11, e.g. by threading an outer thread on the armature cylinder 3 into an inner thread 21 in a bore in blok 11. The block 11 comprises a fuel inlet 12 connectable to a source of liquid fuel, such as oil from a primer pump or a tank (not shown). The fuel inlet 12 is in flow communication with the pump chamber 7 through cylinder openings 13 when the plunger 5 is in a retracted position as shown in Fig. 1. The pump 1 further comprises a first return spring 20 acting on the plunger 5 to bias the plunger in a direction to the left in the figure, i.e. towards the armature in a direction of retracting the plunger 5 from the pump chamber 7 in a return stroke. The pump also comprises a second return spring 14 to bias the armature 4 in a direction to the right in the figure, i.e. in a direction towards plunger 5, and consequently the plunger 5 is biased by the second spring to move in direction of the pump chamber 7. The two counteracting springs 14, 20 are at equilibrium when the plunger 5 is in the neutral position. When the plunger 5 is activated by the drive it will move away from the neutral position, and depending on the direction of movement one or the other of the springs will be compressed, and due to the compression the compressed spring will act on the plunger with a larger spring force trying to restore the equilibrium position. The spring forces thus tend to maintain the plunger at the neutral position.

In operation, when the electromagnet is energized to move the armature 4 forwards in direction of the plunger, the plunger 5 will be subjected to a push accelerating the plunger to the right whereby the edge of the plunger 5 on plunger head 10 seals off the pump chamber 7 and the active stroke is initiated. During the continued travel plunger 5 pressurizes the liquid fuel within the pump chamber 7. When the pressure of the liquid fuel in the pump chamber exceeds the spring force of spring 9, the ball 8 is lifted from its seat, thereby allowing oil to flow from the pump chamber 7 to a pump outlet 18 for delivery to a nozzle of the burner device through a fuel delivery line (not shown) connected to pump outlet 18. A recessed portion in the outer side of the pump cylinder 6 provides a pressure equalizing channel 28 leading into the armature cylinder 3 in the area of the spring 20 on the rear side of the pump cylinder 6. A bore through the end face of armature 4 provides a pressure equalizing channel 29 leading to the rear side of the armature in the area of spring 14. Consequently, the pressure at the fuel inlet is communicated through channels 28, 29 to both sides of armature so that the full the drive end side of the plunger 5 is subjected to the same pressure as the pressure at the fuel inlet.

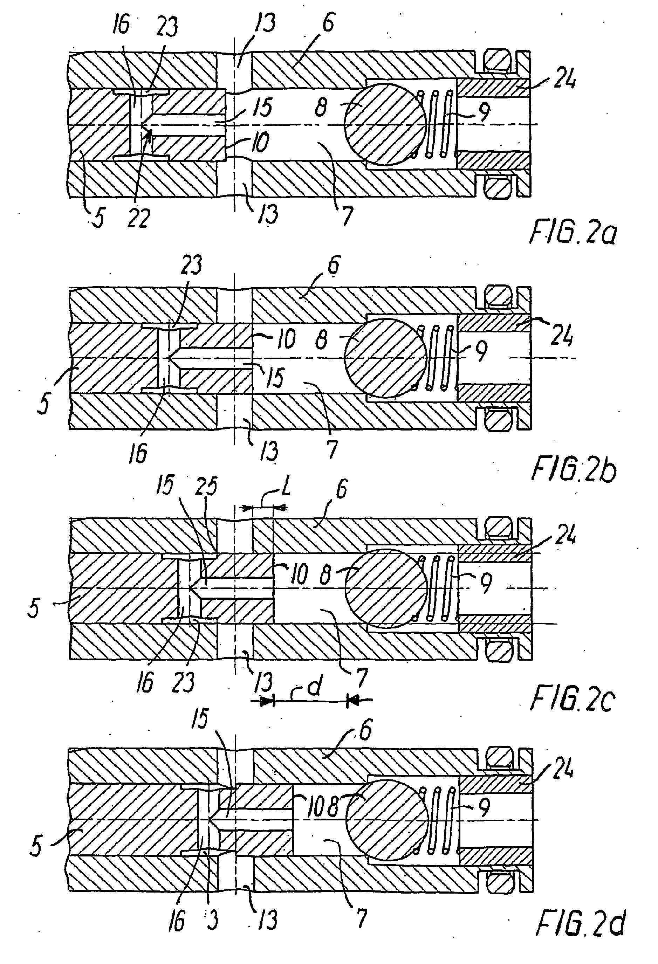

The function of the pump 1 will be more readily understood by the following description with reference to Figs. 2a-2d, where Fig. 2a is an enlarged view of the pump cylinder 6 and the plunger 5 with the plunger 5 in the most retracted position. In this position pump chamber 7 is in flow communication with the fuel inlet through openings 13 in the cylinder wall, and hence the pump chamber 7 is filled with oil at an oil feeding pressure at the fuel inlet. The openings 13 are manufactured as a single through bore extending through the pump cylinder perpendicular to the longitudinal axis of the pump cylinder. As explained above the pump chamber 7 is closed off at the end by the ball 8 which is seated against the rim of the end opening of pump chamber 7 by the action of spring 9. A ring-shaped end stop 24 has been press-fitted into end area of the central bore of the pump cylinder and acts as a spring guide.

In Fig. 2b the plunger has travelled to a position where the plunger 5 seals off the pump chamber 7 from the fuel inlet because plunger 5 closes the openings 13 in the cylinder wall in the instant the plunger head 10 is moved past the full opening 13, whereby the active stroke of plunger 5 begins. An amount of oil is hence captured in the pump chamber defined by the head 10 of the plunger, the inner surface of pump cylinder 6 and the ball 8, and further travelling of plunger 5 to the right in Fig. 2b cause compression and pressurization of the oil until the opening pressure of the check valve has been obtained and ball 8 is lifted from its valve seat defined by the rim of the end opening of pump chamber 7.

In Fig. 2c the plunger 5 has travelled further on to a position just before flow communication between the pump chamber 7 and the openings 13 is reestablished via a pressure relief conduit generally designated by 22. The pressure relief conduit is in the embodiment of Fig. 2 arranged in the plunger and includes a first bore 15 extending coaxially in the longitudinal direction of plunger 5 and a transverse bore 16 debouching into an annular recess 23 in the plunger 5.

During the active stroke of the plunger the oil in the pump chamber is pressurized to a pressure exceeding the feeding pressure at the fuel inlet 12 and exceeding the opening pressure of the check valve because the force generated by the oil pressure on the ball 8 exceeds the closing force of spring 9. During the continued forward movement of the plunger the oil in pump chamber 7 flows out of the outlet 18, until the plunger has been moved through the distance L to the position illustrated in Fig. 2c where a forward cutting off edge 25 on the plunger is abreast of the rim of opening 13. Cutting off edge 25 is delimiting the annular recess 23. When the plunger is moved further forwards the recess 23 and thus the pressure relief conduit 22 is set in communication with opening 13, and fuel oil is caused to escape from the pump chamber 7 via the pressure relief conduit 22 to the opening 13. At this bleeding of the pump chamber 7 the pressure in the pump chamber 7 drops instantly to the pressure at the fuel inlet 12 with the consequence that ball 8 will be seated by the spring force from spring 9 and seal off the opening to outlet 18. At the instant of bleeding the pump chamber 7, the plunger is at the end of the active stroke in a distance d from the maximum stroke end stop position where the end surface of plunger 5 abuts the ball 8.

After bleeding of the pump chamber the plunger continues its forward movement due to inertia in the plunger, but at the same time the spring force from the first return spring causes the plunger to slow down until it obtains the most advanced position illustrated in Fig. 2d where the plunger is momentarily at a stand still and its movement is reversed due to the force from the first return spring 20. The figures show that only a small part of the distance d is utilized.

In the following description of further embodiments the same reference numerals as mentioned above are used for details of the same kind and function.

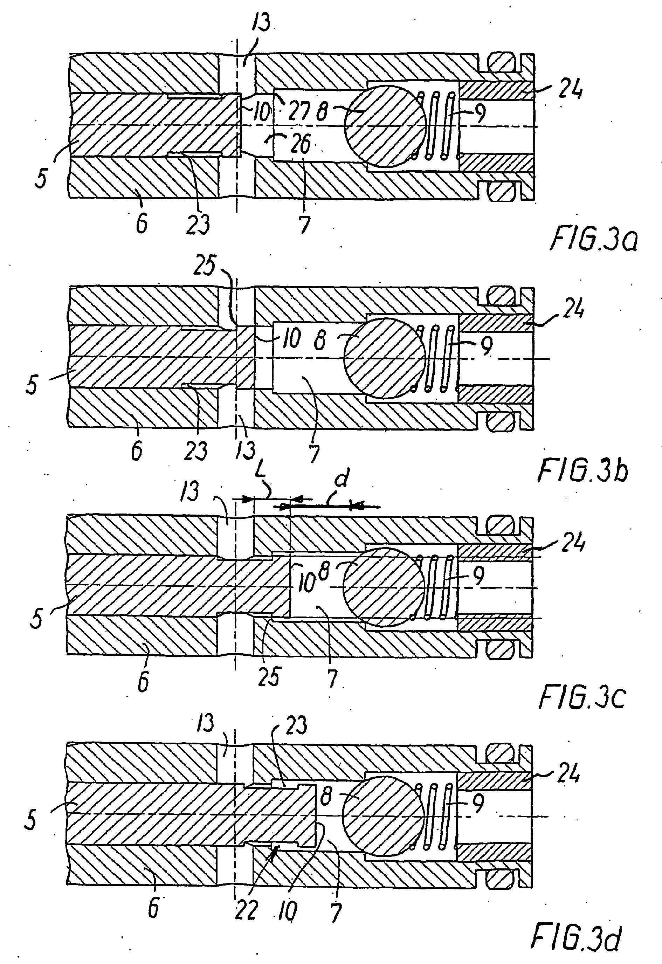

Fig. 3a to 3d illustrates a second embodiment where the pressure relief conduit 22 is formed partly in the pump cylinder 6 and partly in the plunger. The plunger has a recess 23 but no first bore. The head 10 of the plunger has a diameter adapted to the inner diameter of a shoulder 26 at the bottom of pump chamber 7. The shoulder 26 ends in a cutting off edge 27 where the diameter of the pump chamber is increased to be larger than the outer diameter of the plunger 5. The active stroke is initiated when the head 10 of the plunger cuts off opening 13 as illustrated in Fig. 2b. The active stroke continues until the forward cutting off edge 25 passes the cutting off edge 27 on shoulder 26. At this instant, the pressure relief conduit is established by the recess 23 setting the pump chamber 7 in communication with the opening 13 as illustrated in Fig. 3d.

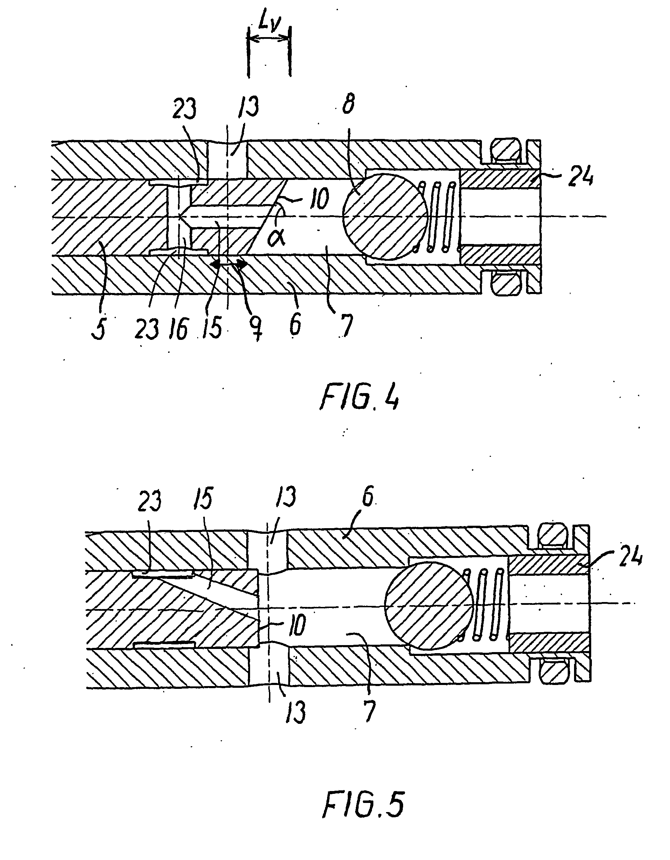

Fig. 4 illustrates a further embodiment where the head 10 of the plunger 5 is not at right angles to the longitudinal axis of the plunger but extends obliquely at an acute angle α thereto. Another difference with respect to the embodiment of Figs. 2a-2d is that only a single opening 13 is provided in the pump cylinder 6. The angle α has been chosen so that the shortest distance q between the recess 23 and the head 10 corresponds to the diameter of the opening 13 and the longest distance between the recess and the head 10 at the opposite side of the plunger corresponds to the sum of the diameter of the opening 13 and the maximum desired active stroke length Lv. The oblique head 10 makes it possible to vary the active stroke length and thus the delivered amount of oil per stroke by rotating the plunger 7 in relation to the pump cylinder 6. The rotation of the plunger to a new setting of the delivered amount can be effected manually, but is preferably effected by a electro-mechanical setting device (not shown). The above description of the angle α allows a change of the delivery amount between zero (idling) and maximum. The plunger can be manufactured with other inclinations of the head 10, e.g. so that the distance q is smaller than the opening 13 which provides for idling when the plunger/pump cylinder are mutually rotated within a limited range of angles. A continuous change of the setting of the amount is possible with the oblique head 10. If a stepwise change between predefined delivery amounts is desired, the plunger can be manufactured with a stepped head, which brings the advantage that a very coarse rotational setting results in the desired amount.

In yet another embodiment depicted in Fig. 5 the pressure relief conduit 22 consists of the annular recess 23 and the first bore 15 which extends directly between head 10 and recess 23.

In an example of an embodiment the plunger diameter is 3 mm and the active stroke length L of the plunger 5 is 0.4 mm. The volume delivered per stroke of the plunger equals to 2.83 mm³. In the embodiment the pump is driven by an electromagnet powered by a 50 Hz alternating current, and hence the output of the pump is approximately 0.5 l/h. In the embodiment, fuel oil is delivered to the liquid pump by gravity from a fuel tank located. The liquid pump delivers the fuel oil at a pressure of 0.15 bar. If a primer pump is used, excess oil delivered to the liquid pump can be returned to the oil tank.

In the above embodiment the pump is driven by an electromagnet. However, alternative plunger drive means can be used, such as a piezo-electric actuator.

The output of the pump may be adjusted by adjusting the frequency of activation of the plunger, e.g. by means of a frequency converter. As an alternative to using springs 14, 20 to control return movements of the plunger, an electromagnetic return device can be used, or the plunger can be provided with only the spring 20, and in this case the plunger 5 has to be mechanically connected to the armature 4.

Details from the different embodiments can be combined into further embodiments according to the present invention.

## Claims

1. A reciprocating liquid pump for delivery of liquid fuel to a domestic burner device, said pump comprising an electromechanical drive means which is electronically activated and acts on a plunger to reciprocate the plunger in a pump chamber of a pump cylinder, whereby liquid fuel is delivered from the pump, said plunger having a maximum stroke end stop position, **characterized in that** the pump comprises pressure relief means to bleed the pump chamber at the end of the active stroke at a distance from the maximum stroke end stop position.

2. A reciprocating liquid pump according to claim 1, **characterized in that** the plunger has a plunger diameter D and an active stroke length L, that the ratio L/D between the active stroke length L and the plunger diameter D is less than 0.4, and preferably less than 0.2.

3. A reciprocating liquid pump according to claim 1 or 2, **characterized in that** the full stroke length of the plunger during the reciprocating cycle is more than two times longer than the active stroke length, preferably longer than three times the active stroke length.

4. A reciprocating liquid pump according to claim 3, **characterized in that** the pressure relief means set the pump chamber in connection with a fuel inlet to the pump prior to and following the active stroke.

5. A reciprocating liquid pump according to any one of claims 1 to 4, **characterized in that** a first return spring acts on the plunger to retract it from the pump chamber towards a neutral position, and that preferably also a second return spring acts on the plunger to advance it in direction of the pump chamber towards said neutral position.

6. A reciprocating liquid pump according to any one of claims 1-5, **characterized in that** the plunger is activated by the electromechanical drive means with a frequency of at least 5 Hz.

7. A reciprocating liquid pump according to claim 6, **characterized in that** the plunger is activated by the plunger drive means with a frequency in the range from 50 to 60 Hz.

8. A reciprocating liquid pump according to any one of claims 1-7, **characterized in that** the electromechanical drive means can include an armature comprising ferromagnetic material and mounted in extension of the plunger, and an electromagnet arranged outside the armature.

9. A liquid pump according to any one of claims 1-8, **characterized in that** the pressure relief means include a pressure relief conduit arranged in the plunger and cooperating with a fuel inlet in the pump cylinder.

10. A reciprocating liquid pump according to any one of claims 1-9, **characterized in that** the pressure relief conduit comprises at least a first bore and an annular recess at the outer surface of the plunger, said first bore extending into the plunger from the pump chamber side thereof towards the annular recess.

11. A reciprocating liquid pump according to claim 10, **characterized in that** the first bore in the plunger extends in direction of the centre axis of the plunger and joins a transverse bore extending into an annular recess in the outer surface of the plunger, or the first bore extends obliquely to said centre axis directly into the annular recess in the outer surface of the plunger.

12. A reciprocating liquid pump according to any one of claims 1-11, **characterized in that** the pressure relief means includes a pressure relief passage arranged in the pump cylinder.

13. A reciprocating liquid pump according to any one of claims 1-12, **characterized in that** the liquid pump includes one or more pressure equalizing channels communicating the pressure at the fuel inlet to the drive end side of the plunger.

14. A reciprocating liquid pump according to any one of claims 1-13, **characterized in that** the liquid fuel delivery amount per activation of the plunger is in the range of 1 mm³ to 50 mm³, preferably in the range of 2 mm³ to 15 mm³.

15. A reciprocating liquid pump according to any one of claims 1-14, **characterized in that** the liquid fuel delivery pressure from the pump is in the range of from 0.01 bar to 3 bar above atmospheric pressure, preferably from 0.01 bar to 0.2 bar above atmospheric pressure.

16. A reciprocating liquid pump according to any one of claims 1-15, **characterized in that** the delivery amount of fuel from the pump is adjustable.

17. A reciprocating liquid pump according to claim 16, **characterized in that** the delivery amount is adjustable by turning the pump cylinder in relation to the plunger.

18. A reciprocating liquid pump according to claim 15, **characterized in that** the delivery amount is adjustable by changing the frequency of activation of the plunger.

## Patentansprüche

1. Flüssigkeitskolbenpumpe zur Lieferung von flüssigem Brennstoff zu einem Haushaltsbrennergerät, die elektronisch aktivierte, elektromechanische Antriebsmittel aufweist, die einen Kolben zur Hin- und Herbewegung in einer Pumpenkammer eines Pumpenzylinders antreibt, wobei flüssiger Brennstoff von der Pumpe geliefert wird und wobei der Kolben einen Endstopp für die maximale Hubposition hat, **dadurch gekennzeichnet, dass** die Pumpe Druckentlastungsmittel aufweist zur Entlastung der Pumpenkammer am Ende des aktiven Hubs in einem Abstand zum Endstopp für die maximale Hubposition.

2. Flüssigkeitskolbenpumpe nach Anspruch 1, **dadurch gekennzeichnet, dass** der Kolben einen Kolbendurchmesser D und eine aktive Hublänge L hat, wobei das Verhältnis L/D zwischen der aktiven Hublänge L und dem Kolbendurchmesser D weniger als 0,4 ist, und vorzugsweise weniger als 0,2.

3. Flüssigkeitskolbenpumpe nach Anspruch 1 oder 2, **dadurch gekennzeichnet, dass** die volle Hublänge des Kolbens während des hin- und hergehenden Zyklusses mehr als zwei Mal länger ist als die aktive Hublänge, vorzugsweise mehr als drei Mal länger als die aktive Hublänge.

4. Flüssigkeitskolbenpumpe nach Anspruch 3, **dadurch gekennzeichnet, dass** die Druckentlastungsmittel vor und nach des aktiven Hubs die Pumpenkammer mit einem Brennstoffeinlass zur Pumpe in Verbindung bringt.

5. Flüssigkeitskolbenpumpe nach einem der Ansprüche 1 bis 4, **dadurch gekennzeichnet, dass** eine erste Rückzugsfeder am Kolben wirkt, um ihn von der Pumpenkammer gegen eine neutrale Position zurückzuziehen, und dass vorzugsweise auch eine zweite Rückzugsfeder am Kolben wirkt, um ihn Richtung der Pumpenkammer gegen diese neutrale Position vorzurücken.

6. Flüssigkeitskolbenpumpe nach einem der Ansprüche 1 bis 5, **dadurch gekennzeichnet, dass** der Kolben von den elektromechanischen Kolbenantriebsmitteln mit einer Frequenz von mindestens 5 Hz aktiviert wird.

7. Flüssigkeitskolbenpumpe nach Anspruch 6, **dadurch gekennzeichnet, dass** der Kolben von den Kolbenantriebsmitteln mit einer Frequenz im Bereich von 50 zu 60 Hz aktiviert wird.

8. Flüssigkeitskolbenpumpe nach einem der Ansprüche 1 bis 7, **dadurch gekennzeichnet, dass** die elektromechanischen Antriebsmittel einen Anker umfassen, der ein ferromagnetisches Material aufweist und in Verlängerung des Kolbens angeordnet ist, und ein außerhalb des Ankers angeordneter Elektromagnet.

9. Flüssigkeitskolbenpumpe nach einem der Ansprüche 1 bis 8, **dadurch gekennzeichnet, dass** die Druckentlastungsmittel einen im Kolben angeordneten und mit einem Flüssigkeitseinlass im Pumpenzylinder zusammenarbeitenden Druckentlastungskanal aufweisen.

10. Flüssigkeitskolbenpumpe nach einem der Ansprüche 1 bis 9, **dadurch gekennzeichnet, dass** der Druckentlastungskanal mindestens eine erste Bohrung und eine kreisrunde Vertiefung an der Außenfläche des Kolbens aufweist, wobei die sich die erste Bohrung von der Pumpenkammerseite in den Kolben hinein in Richtung der kreisrunden Vertiefung erstreckt.

11. Flüssigkeitskolbenpumpe nach Anspruch 10, **dadurch gekennzeichnet, dass** sich die erste Bohrung im Kolben in Richtung der Zentralachse des Kolbens erstreckt und mit einer diagonalen Bohrung verbunden wird, die sich in eine kreisrunde Vertiefung an der Außenfläche des Kolbens erstreckt, oder die erste Bohrung erstreckt sich schiefwinklig zur genannten Zentralachse direkt in die kreisrunde Vertiefung an der Außenfläche des Kolbens.

12. Flüssigkeitskolbenpumpe nach einem der Ansprüche 1 bis 11, **dadurch gekennzeichnet, dass** die Druckentlastungsmittel eine im Pumpenzylinder angeordnete Druckentlastungspassage aufweisen.

13. Flüssigkeitskolbenpumpe nach einem der Ansprüche 1 bis 12, **dadurch gekennzeichnet, dass** die Flüssigkeitspumpe einen oder mehrere druckausgleichende Kanäle aufweist, die dem Druck am Brennstoffeinlass an die Antriebsendenseite des Kolbens überträgt.

14. Flüssigkeitskolbenpumpe nach einem der Ansprüche 1 bis 13, **dadurch gekennzeichnet, dass** die Menge an gefördertem, flüssigem Brennstoff pro Aktivierung des Kolbens im Bereich von 1 mm³ bis 50 mm³ liegt, vorzugsweise im Bereich 2 mm³ bis 15 mm³.

15. Flüssigkeitskolbenpumpe nach einem der Ansprüche 1 bis 14, **dadurch gekennzeichnet, dass** der Förderdruck des flüssigen Brennstoffs von der Pumpe im Bereich von 0,01 bar bis 3 bar über dem Luftdruck, vorzugsweise von 0,01 bis 0,2 bar über dem Luftdruck.

16. Flüssigkeitskolbenpumpe nach einem der Ansprüche 1 bis 15, **dadurch gekennzeichnet, dass** die von der Pumpe geförderte Menge an Brennstoff justierbar ist.

17. Flüssigkeitskolbenpumpe nach Anspruch 16, **dadurch gekennzeichnet, dass** die geförderte Menge durch Drehen des Pumpenzylinders im Verhältnis zum Kolben justierbar ist.

18. Flüssigkeitskolbenpumpe nach Anspruch 15, **dadurch gekennzeichnet, dass** die geförderte Menge durch Änderung der Frequenz der Kolbenaktivierung justierbar ist.

## Revendications

1. Pompe à liquide alternative pour la distribution d'un combustible liquide à un dispositif de brûleur domestique, ladite pompe comprenant un système de commande électromécanique qui est électroniquement activé et agit sur un piston pour donner un mouvement alternatif au piston dans une chambre de pompe d'un cylindre de pompe, moyennant quoi le combustible liquide est fourni depuis la pompe, ledit piston ayant une position d'arrêt de fin de course maximum, **caractérisée en ce que** la pompe comprend un système de détente de pression pour purger la chambre de pompe à la fin de la course active à une certaine distance de la position d'arrêt de la fin de course maximale.

2. Pompe à liquide alternative selon la revendication 1, **caractérisée en ce que** le piston a un diamètre de piston D et une longueur de course active L, que le rapport L/D entre la longueur de course active L et le diamètre de piston D est inférieur à 0,4 et de préférence inférieur à 0,2.

3. Pompe à liquide alternative selon la revendication 1 ou 2, **caractérisée en ce que** la longueur de course totale du piston pendant le cycle alternatif est plus de deux fois plus longue que la longueur de course active, de préférence plus de trois fois plus longue que la longueur de course active.

4. Pompe à liquide alternative selon la revendication 3, **caractérisée en ce que** le système de détente de pression met la chambre de pompe en connexion avec une entrée de combustible à la pompe avant et après la course active.

5. Pompe à liquide alternative selon l'une quelconque des revendications 1 à 4, **caractérisée en ce qu'**un premier ressort de rappel agit sur le piston pour le rétracter de la chambre de pompe vers une position neutre, et que, de préférence, également un second ressort de rappel agit sur le piston pour l'avancer dans une direction de la chambre de pompe vers ladite position neutre.

6. Pompe à liquide alternative selon l'une quelconque des revendications 1-5, **caractérisée en ce que** le piston est activé par le système de commande électromécanique avec une fréquence d'au moins 5 Hz.

7. Pompe à liquide alternative selon la revendication 6, **caractérisée en ce que** le piston est activé par le système de commande de piston avec une fréquence dans la gamme de 50 à 60 Hz.

8. Pompe à liquide alternative selon l'une quelconque des revendications 1-7, **caractérisée en ce que** le système de commande électromécanique peut comprendre une armature comprenant un matériau ferromagnétique et montée en extension du piston, et un électro-aimant disposé hors de l'armature.

9. Pompe à liquide selon l'une quelconque des revendications 1-8, **caractérisée en ce que** le système de détente de pression comprend un conduit de détente de pression disposé dans le piston et coopérant avec une entrée de combustible dans le cylindre de pompe.

10. Pompe à liquide alternative selon l'une quelconque des revendications 1-9, **caractérisée en ce que** le conduit de détente de pression comprend au moins un premier alésage et une cavité annulaire à la surface extérieure du piston, ledit premier alésage s'étendant dans le piston depuis le côté de la chambre de pompe vers la cavité annulaire.

11. Pompe à liquide alternative selon la revendication 10, **caractérisée en ce que** le premier alésage dans le piston s'étend dans la direction de l'axe central du piston et rejoint un alésage transversal s'étendant dans une cavité annulaire dans la surface extérieure du piston, ou le premier alésage s'étend de manière oblique par rapport audit axe central directement dans la cavité annulaire de la surface extérieure du piston.

12. Pompe à liquide alternative selon l'une quelconque des revendications 1-11, **caractérisée en ce que** le système de détente de pression comprend un passage de détente de pression disposé dans le cylindre de pompe.

13. Pompe à liquide alternative selon l'une quelconque des revendications 1-12, **caractérisée en ce que** la pompe à liquide comprend un ou plusieurs canaux d'égalisation de pression communiquant la pression à l'entrée du combustible vers le côté de l'extrémité de commande du piston.

14. Pompe à liquide alternative selon l'une quelconque des revendications 1-13, **caractérisée en ce que** la quantité de distribution du combustible liquide par activation du piston est dans la gamme de 1 mm³ à 50 mm³, de préférence dans la gamme de 2 mm³ à 15 mm³.

15. Pompe à liquide alternative selon l'une quelconque des revendications 1-14, **caractérisée en ce que** la pression de distribution du combustible liquide depuis la pompe est dans la gamme de 0,01 bar à 3 bars au dessus de la pression atmosphérique, de préférence de 0,01 bar à 0,2 bar au dessus de la pression atmosphérique.

16. Pompe à liquide alternative selon l'une quelconque des revendications 1-15, **caractérisée en ce que** la quantité de distribution de combustible de la pompe est réglable.

17. Pompe à liquide alternative selon l'une quelconque des revendications 1-12, **caractérisée en ce que** la quantité de distribution est réglable en tournant le cylindre de pompe relativement au piston.

18. Pompe à liquide alternative selon la revendication 15, **caractérisée en ce que** la quantité de distribution est réglable en modifiant la fréquence d'activation du piston.
